# EUROPÄISCHE PATENTSCHRIFT

(11) **EP 0 443 194 B1**
(45) Veröffentlichungstag und Bekanntmachung des Hinweises auf die Patenterteilung: **10.11.1993**
(21) Anmeldenummer: 90125323.7
(22) Anmeldetag: 22.12.1990
(51) Int. Cl.: F16B 13/12

(54) **Metallhülsendübel**
Metal sleeve dowel
Cheville à douille métallique

(30) Priorität: 26.01.1990 DE 9000886 U
(43) Veröffentlichungstag der Anmeldung: 28.08.1991
(73) Patentinhaber: fischerwerke Artur Fischer GmbH & Co. KG, D-72178 Waldachtal (DE)
(72) Erfinder: Schulte, Helmut, W-5880 Lüdenscheid (DE)

(56) Entgegenhaltungen:
- DE-A- 3 520 730
- DE-C- 2 605 732
- DE-U- 9 000 886
- FR-A- 2 433 670
- US-A- 3 550 499

## Beschreibung

Die Erfindung betrifft einen Metallhülsendübel aus einer einen Längsspalt aufweisenden Metallhülse mit auf eine Befestigungsschraube abgestimmten schraubenabschnittförmigen Führungsschlitzen.

Ein derartiger Metallhülsendübel ist aus der DE-C-26 05 732 bekannt. Ein derartiger Metallhülsendübel ist als feuerhemmender Dübel geeignet. Er ist für einen Einsatz in Beton, Gasbeton, Vollsteinen, Lochsteinen und ähnlichen Werkstoffen bestimmt. Wichtig ist ein ausreichender Halt des Metallhülsendübels innerhalb der Bohrung. Allein eine Aufspreizung in Umfangsrichtung hat sich als nicht ausreichend erwiesen.

Aufgabe der Erfindung ist eine solche Ausbildung des Metallhülsendübels, daß er beim Einschrauben der Befestigungsschraube einen sicheren Halt innerhalb der Bohrung sichert.

Diese Aufgabe wird nach der Erfindung dadurch gelöst, daß im Anschluß an die Führungsschlitze eine Innenringsicke vorgesehen ist und daß das den Führungsschlitzen gegenüberliegende Endteil der Metallhülse in mehrere Segmente mit je einer Innenlängssicke unterteilt ist.

Die Erfindung unterscheidet sich insofern vom Stand der Technik, als die Innenringsicke und die Längssicken eine sichere Spreizung sicherstellen. Die Innenringsicke bedingt eine Vorspreizung.

Eine scharfkantige Verankerung oder Verkrallung der Stirnenden wird dadurch erreicht, daß die Enden der Segmente (7) unter Bildung von radialen Stirnkanten gefaltet sind.

Eine Ausführungsform der Erfindung wird im Folgenden unter Bezugnahme auf die anliegende Zeichnung erläutert, in der darstellen:
- Figur 1: eine Gesamtübersicht des Metallhülsendübels in gespreiztem Zustand,
- Figur 2: eine Draufsicht zu Fig. 1 und
- Figur 3: eine Ansicht des Endteils in einer Drehung von 120° gegenüber Figur 1.

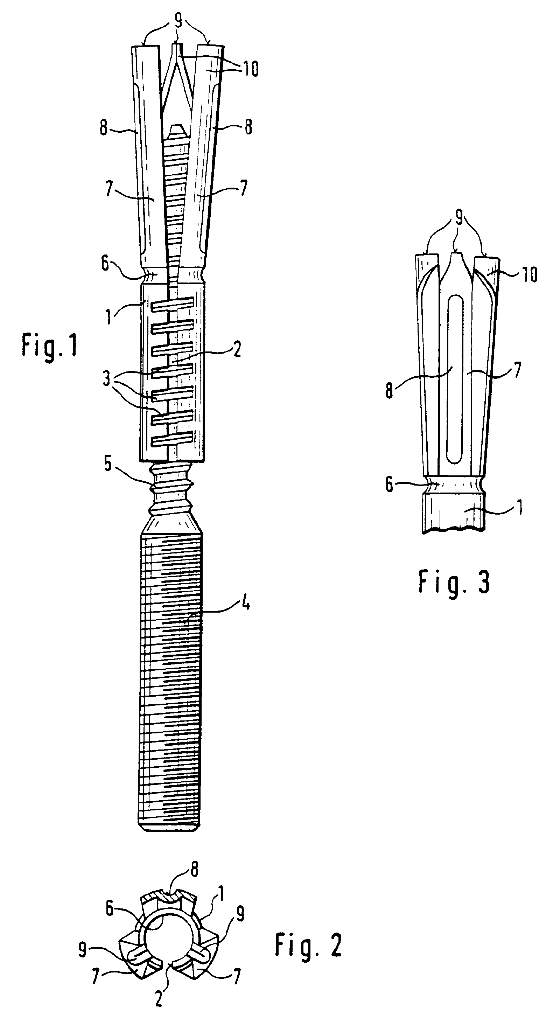

Der Metallhülsendübel nach Figur 1 besteht aus einer im wesentlichen zylindrischen gerollten Metallhülse 1 mit einem Längsschlitz 2. In dem einschraubseitigen Ende der Metallhülse 1 sind schraubenabschnittförmige Führungsschlitze 3 vorgesehen, die in ihrer Abmessung und Steigung an das Gewinde 5 einer Befestigungsschraube 4 angepaßt sind. An den Abschnitt mit den Führungsschlitzen 3 schließt sich eine Innenringsicke 6 an.

Das Ende im Anschluß an die Innenringsicke 6 ist in mehrere Segmente 7 aufgeteilt. Bei der dargestellten Ausführungsform sind drei Segmente 7 vorhanden. Jedes Segment 7 ist ein Umfangsabschnitt, der sich über 120° erstreckt. In Längsrichtung eines Segmentes 7 ist eine Innenlängssicke 8 vorgesehen, die in dem geschnittenen Teil der Figur 2 dargestellt ist. Das Ende jedes Segmentes 7 ist unter Bildung einer radialen Stirnkante 9 gefaltet, so daß das Segment 7 in eine zahnartige Kralle 10 ausläuft. Man kann auch das Ende eines Segmentes stegartig nach innen falten, so daß in dieses Ende das Gewinde 5 der Befestigungsschraube 4 eingreifen kann.

Im Ausgangszustand liegen die Segmente 7 aneinander an. Der Längsschlitz 2 ist im wesentlichen geschlossen. Die Metallhülse 1 kann in diesem Zustand in ein Bohrloch eingesteckt werden, wobei die Metallhülse in Umfangsrichtung nachgibt und sich jeweils an die Wandung des Bohrloches anpaßt.

Beim Einschrauben der Befestigungsschraube 4 greift das Gewinde 5 in die Führungsschlitze ein, so daß ein sicherer Eingriff gewährleistet ist. Sobald die Gewindespitze die Innenlängssicke 6 erreicht, wird die Metallhülse in Umfangsrichtung vorgespreizt. Beim weiteren Einschrauben kommt das Gewinde mit den Wänden der Innenlängssicke 8 in Eingriff und spreizt dadurch die Segmente 7, deren Krallen fest in die Umfangswandung des Bohrloches gedrückt werden.

Hierdurch erreicht man einen sehr festen Halt der Metallhülse in einem Bohrloch, so daß der Metallhülsendübel für hohe Belastungen geeignet ist. Infolge der großen Spreizwirkung legt sich der Metallhülsendübel auch an den Wandungen von Bohrlöchern in Gasbeton oder in Lochsteinen sicher an. Der Metallhülsendübel ist für Werkstoffe jeder Art, auch poröse Werkstoffe geeignet. Da keinerlei Kunststoffteile verwendet sind, erfüllt der Metallhülsendübel die Anforderungen an feuerhemmende Werkstoffe.

## Patentansprüche

1. Metallhülsendübel aus einer einen Längsspalt aufweisenden Metallhülse mit auf eine Befestigungsschraube abgestimmten schraubenabschnittförmigen Führungsschlitzen, **dadurch gekennzeichnet**, daß im Anschluß an die Führungsschlitze (3) eine Innenringsicke (6) vorgesehen ist und daß das den Führungsschlitzen (3) gegenüberliegende Endteil der Metallhülse (1) in mehrere Segmente (7) mit je einer Innenlängssicke (8) unterteilt ist.

2. Metallhülsendübel nach Anspruch 1, **dadurch gekennzeichnet**, daß die Enden der Segmente (7) unter Bildung von radialen Stirnkanten (9) gefaltet sind.

## Claims

1. Metal sleeve-type plug consisting of a metal sleeve, having a longitudinal cleft and guide slots which are in the shape of a portion of a screw, matched to a fixing screw, characterised in that adjoining the guide slots (3) an internal annular bead (6) is provided, and that the end part, lying opposite the guide slots (3), of the metal sleeve (1) is divided into a plurality of segments (7), each with an internal longitudinal bead (8).

2. Metal sleeve-type plug according to Claim 1, characterised in that the ends of the segments (7) are folded, forming radial end edges (9).

## Revendications

1. Cheville à douille métallique, formée d'une douille qui présente une fente longitudinale et des fentes de guidage en forme de segments hélicoïdaux complémentaires du filetage d'une vis de fixation, cheville caractérisée en ce qu'une moulure annulaire (6) creuse est formée très près de ces fentes (3) de guidage et en ce que la partie de la douille métallique (1) qui est située du côté opposé à ces fentes (3) est subdivisée en plusieurs segments (7) comportant chacun une moulure longitudinale (8) creuse.

2. Cheville à douille métallique selon la revendication 1, caractérisée en ce que les extrémités des segments (7) sont repliées en formant des arêtes radiales (9) frontales.
